# EUROPEAN PATENT SPECIFICATION

(11) **EP 2 052 878 B1**
(45) Date of publication and mention of the grant of the patent: **20.04.2011**
(21) Application number: 08167427.7
(22) Date of filing: 23.10.2008
(51) Int. Cl.: B60C 1/00, B60C 15/04, B60C 15/06, C08L 7/00, C08L 9/00, C08L 21/00

(54) **Tire with resistance to rim slip**
Reifen mit Felgenschlupfwiderstand
Pneu avec résistance au glissement de la jante

(30) Priority: 26.10.2007 US 924882
(43) Date of publication of application: 29.04.2009
(73) Proprietor: The Goodyear Tire & Rubber Company, Akron, OH 44316-0001 (US)
(72) Inventor: Sandstrom, Paul Harry, Cuyahoga Falls, OH 44223 (US)
(74) Representative: Kutsch, Bernd

(56) References cited:
- EP-A- 0 863 027
- EP-A- 0 906 838
- EP-A- 1 125 976
- EP-A- 1 580 037
- EP-A- 1 674 296
- GB-A- 613 121
- US-A- 2 905 222
- US-A- 5 021 492
- US-A- 6 011 093
- US-B1- 7 259 205

## Description

### Field of the Invention

This invention relates to a tire with resistance to rim slip, namely slippage of a rubber tire on an associated rigid wheel rim of a tire/rim assembly. The invention relates to a rubber chafer component of a tire for seating the tire against a rigid tire rim. The rubber chafer component comprises a rubber composition which preferably contains zinc rosinate within and on the surface of said rubber composition, and thereby the chafer component promotes an increased coefficient of friction of the chafer component against a rigid tire rim of a tire/rim assembly as compared to a more conventional zinc stearate contained in a tire chafer rubber composition. The zinc rosinate may be a product of rosin acid and zinc oxide formed in situ within said rubber composition or may be added directly to the rubber composition as zinc rosinate.

### Background of the Invention

The chafer is an important component of a pneumatic tire. It is an exposed tire component located in the bead portion of the tire and is used to seat the tire against a rigid wheel rim to form a tire/wheel assembly for an appropriate vehicle. The seating of the chafer against the wheel rim is assisted by application of internal gas pressure (e.g. air or nitrogen) to the cavity of the pneumatic tire.

It is important for tires, particularly high performance tires and race tires, to have little, if any, slip of the tire against the rigid tire wheel on which the tire is mounted where significant torque is applied to the wheel by the vehicle. If the tire/wheel assembly has been balanced by placement of lead weights on the tire rim and the tire should slip and therefore change its location on the rim, the balance of the wheel assembly might be thereby changed.

The tire chafer is typically a conjugated diene-based rubber composition which contains zinc stearate as a product of zinc oxide and stearic acid formed in situ within the rubber composition. Zinc stearate itself is a relatively slippery soap, particularly in the presence of water, which gradually migrates and blooms to the outer surface of the chafer intended to be wheel rim contacting and thereby tends to reduce the tire chafer's frictional force against the rigid tire rim.

Accordingly, a challenge has been undertaken to evaluate the feasibility of providing an alternative to the zinc stearate contained in and on the surface of the tire chafer.

For such challenge, the feasibility of replacing the stearic acid in the chafer rubber composition with rosin acid is contemplated in which zinc rosinate is thereby formed in situ within the chafer rubber composition instead of the zinc stearate or in which the zinc rosinate is added directly to the rubber composition.

While it is contemplated that both the zinc rosinate and zinc stearate are in a form of soaps, and particularly in the presence of water, the zinc rosinate is more in the nature of a sticky soap than the zinc stearate to thereby impart a greater coefficient of friction of the associated rubber chafer tire component against a rigid tire rim.

In the description of this invention, the terms "compounded" rubber compositions and "compounds"; where used refer to the respective rubber compositions which have been compounded with appropriate compounding ingredients. The terms "rubber" and "elastomer" may be used interchangeably unless otherwise indicated. The amounts of materials are usually expressed in parts of material per 100 parts of rubber by weight (phr).

US-A- 6,011,093 describes a rubber composition comprising Chinese gum rosin, zinc oxide and stearic acid. GB-A- 613,121 describes a rubber composition comprising carbon black, rosin and zinc oxide. US-A- 2,905,222 describes a rubber composition comprising carbon black, zinc oxide and a mineral oil used as plasticizer which can be rosin. Further rubber compositions usable in a tire are described in US-B- 7,259,205, EP-A- 1 674 296, EP-A- 1 580 037, EP-A- 1 125 976, EP-A- 0 906 838, EP-A- 0 863 027 and US-A- 5,021492.

### Disclosure and Practice of the Invention

The invention relates to a tire according to claim 1 and to a method according to claim 7.

Dependent claims refer to preferred embodiments of the invention.

In accordance with one embodiment of this invention, a tire is provided having a chafer composed of a rubber composition which contains in situ formed zinc rosinate within and on the outer surface of the said rubber composition, particularly the rigid tire wheel rim contacting surface of the chafer, wherein the rubber composition comprises, based upon parts by weight per 100 parts by weight rubber (phr):
(A) (100 phr) of at least one conjugated diene-based elastomer,
(B) 1 to 10, preferably at least 1, and more preferably in a range of from 2 to 5, phr of zinc soap comprising zinc rosinate (as an in situ formed product of zinc oxide and rosin acid within the rubber composition or as a zinc rosinate added to the rubber composition in a form of zinc rosinate) wherein said zinc rosinate is the product of zinc oxide and rosin acid or is zinc rosinate added to the rubber composition.

In practice, said rosin acids may include gum rosin acid, wood rosin acid and tall oil rosin acid, and hydrogenated and disproportionated forms thereof, which are well known to those skilled in such art. For example, see "Rosin and Rosin Derivatives", found in the Encyclopedia of Chemical Technology, Second Edition, 1968, Pages 475 through 508.

In practice, said tire chafer preferably contains said zinc rosinate within its rubber composition and on its outer surface, namely its rigid tire wheel rim contacting surface.

Accordingly, a significant aspect of the invention is a total elimination of stearic acid with rosin acid when used in a zinc oxide-containing sulfur curable conjugated diene-based elastomer containing rubber composition, particularly a tire chafer rubber composition.

This aspect is considered herein as being significant in a sense of providing a chafer rubber composition with zinc rosinate as the primary and preferably only zinc-based compound.

In practice, various elastomers, including conjugated diene-based elastomers, may be used for the chafer rubber composition.

Representative of such elastomers are polymers comprised of at least one of isoprene and 1,3-butadiene and copolymers of styrene and at least one of isoprene and 1,3-butadiene.

Representative examples of such elastomers are, for example, comprised of cis 1,4-polyisoprene rubber (natural or synthetic rubber), cis 1,4-polybutadiene rubber, styrene/butadiene copolymer rubber, styrene/isoprene/butadiene terpolymer rubber and isoprene/butadiene rubber.

The tire chafer rubber composition may also contain minor amounts (e.g. up to 25 phr) of saturated elastomers such as, for example, those comprised of EPDM (ethylene/propylene/non-conjugated diene terpolymer rubber), butyl rubber, halobutyl rubber and brominated copolymers of paramethylstyrene and isobutylene and their mixtures.

In one aspect said tire chafer rubber composition may contain from 30 to 120, alternately from 30 to 100, phr of particulate reinforcing fillers comprising:
(A) carbon black, or
(B) carbon black and up to 100 phr of silica such as amorphous synthetic silica, preferably precipitated silica, or
(C) from 10 to 100 phr of rubber reinforcing carbon black and from 10 to 100 phr of silica such as amorphous synthetic silica, preferably precipitated silica.

The silica (e.g. precipitated silica) may optionally, and if desired, be used in conjunction with a silica coupler to couple the silica to the elastomer(s), to thus enhance its effect as reinforcement for the elastomer composition. Where said silica is used in the chafer rubber composition, such silica couplers for such purpose are well known and typically have a moiety reactive with hydroxyl groups (e.g. silanol groups) contained on the silica and another moiety interactive with the elastomer(s), namely the said conjugated diene-based elastomers, to create the silica-to-rubber coupling effect.

In practice, a silica coupler ("coupling agent") may be, for example,
(A) a bis-(3-triakloxysilylalkyl) polysulfide such as, for example, a bis-(3-triethoxysilylpropyl) polysulfide, having an average of from 2 to 4 and more preferably an average of from 2 to 2.6 or from 3.4 to 4, connecting sulfur atoms in its polysulfidic bridge, or
(B) a bis-(3-triethoxysilylpropyl) polysulfide having an average of from 2 to 2.6 connecting sulfur atoms in its polysulfidic bridge or a bis-(3-triethoxysilylpropyl) polysulfide having an average of from 3.4 to 4 connecting sulfur atoms in its polysulfidic bridge, wherein said polysulfide having an average of from 2 to 2.6 connecting sulfur atoms in its polysulfidic bridge (to the exclusion of such polysulfide having an average of from 3 to 4 connecting sulfur atoms in its polysulfidic bridge) is blended with said rubber composition in the absence of sulfur and sulfur vulcanization accelerator and wherein said polysulfide having an average of from 3.4 to 4 connecting sulfur atoms in its polysulfidic bridge is thereafter blended with said rubber composition in the presence of sulfur and at least one sulfur vulcanization accelerator, or
(C) an organoalkoxymercaptosilane composition of the general Formula (I) represented as:

   (I) (X)ₙ(R₇O)₃₋ₙ-Si-R₈-SH

   wherein X is a radical selected from a halogen, namely chlorine or bromine and preferably a chlorine radical, and from alkyl radicals having from one to 16, preferably from one through 4, carbon atoms, preferably selected from methyl, ethyl, propyl (e.g. n-propyl) and butyl (e.g. n-butyl) radicals; wherein R₇ is an alkyl radical having from 1 through 18, alternately 1 through 4, carbon atoms preferably selected from methyl and ethyl radicals and more preferably an ethyl radical; wherein R₈ is an alkylene radical having from one to 16, preferably from one through 4, carbon atoms, preferably a propylene radical; and n is an average value of from zero through 3, preferably zero, and wherein, in such cases where n is zero or 1, R₇ may be the same or different for each (R₇O) moiety in the composition, and
(D) said organoalkoxyomercaptosilane of the general Formula (I) capped with a moiety which uncaps the organoalkoxymercaptosilane upon heating to an elevated temperature.

Representative examples of various organoalkoxymercaptosilanes are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, tripropoxy mercaptopropyl silane, ethoxy dimethoxy mercaptopropylsilane, ethoxy diisopropoxy mercaptopropylsilane, ethoxy didodecyloxy mercaptopropylsilane and ethoxy dihexadecyloxy mercaptopropylsilane.

Such organoalkoxymercaptosilanes may be capped with various moieties as discussed above.

A representative example of a capped organoalkoxymercaptosilane coupling agent useful for this invention is a liquid 3-octanoylthio-1-propyltriethoxysilane as NXT™ Silane from the GE Silicones Company.

The coupling agent may, for example, be added directly to the elastomer mixture or may be added as a composite of precipitated silica and such coupling agent formed by treating a precipitated silica therewith or by treating a colloidal silica therewith and precipitating the resulting composite.

For example, said silica (e.g. precipitated silica), or at least a portion of said silica, may be pre-treated prior to addition to said elastomer(s):
(A) with an alkylsilane of the general Formula (II), or
(B) with said bis(3-triethoxysilylpropyl) polysulfide having an average of from 2 to 4 connecting sulfur atoms in its polysulfidic bridge, or
(C) with said organomercaptosilane of the general Formula (I), or
(D) with a combination of said alkylsilane of general Formula (I) and said bis(3-triethoxysilylpropyl) polysulfide having an average of from 2 to 4 connecting sulfur atoms in its polysulfidic bridge, or
(E) with a combination of said alkylsilane of general Formula (II) and said organomercaptosilane of general Formula (I);
wherein said alkylsilane of the general Formula (II) is represented as:

(II) Xₙ-Si-R₆₍₄₋ₙ₎

wherein R₆ is an alkyl radical having from 1 to 18 carbon atoms, preferably from 1 through 4 carbon atoms; n is a value of from 1 through 3; X is a radical selected from the group consisting of halogens, preferably chlorine, and alkoxy groups selected from methoxy and ethoxy groups, preferably an ethoxy group.

A significant consideration for said pre-treatment of said silica is to reduce, or eliminate, evolution of alcohol in situ within the rubber composition during the mixing of the silica with said elastomer such as may be caused, for example, by reaction such coupling agent contained within the elastomer composition with hydroxyl groups (e.g. silanol groups) contained on the surface of the silica.

### Brief Description of the Drawing

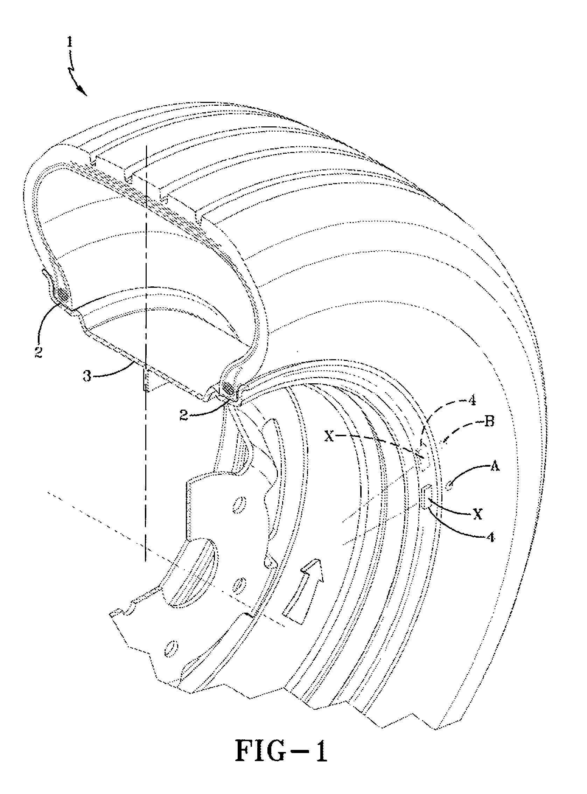

A Drawing is provided in a form of Figure 1 of a tire/wheel assembly composed of a tire seated against a rigid metal wheel rim.

### Detailed Specification

In FIG 1, a cross section of a tire 1 is shown mounted in a rigid metal tire wheel rim 3.

FIG 1 depicts a prospective cross section of a tire 1, including its rim-contacting chafer component 2 mounted on a rigid tire wheel rim 3 to form a tire/wheel assembly with the tire chafer 2 seated against the rigid tire wheel rim 3 to seal the tire 1 against the rigid rim 3 to both restrict air leakage from the internal tire cavity to the atmosphere and to form a direct connection of the vehicular wheel rim 3 to the tire and thereby enable transmission of vehicular driving power to the tire 1 itself and thence to the tire tread running surface and ground.

The tire chafer 2 and/or portion of the rim 3 to which the chafer 2 is to be seated are, coated with a water based soap solution to lubricate the associated surfaces of the tire chafer 2 and rim 3 and thereby facilitate fitting the tire 1 to the rigid rim 3.

The tire/rim assembly is balanced by appropriately positioning and affixing, namely clamping, a lead balance pad 4 to the rigid metal wheel rim 3. Such balancing of a tire/wheel assembly is well known to those having skill in such art.

For the purposes of FIG 1, the position of the balance pad 4 on the rigid rim 3 is assigned a mark X which is aligned with an assigned mark A on the tire 1.

In a comparative example of FIG 1 the rubber composition of the chafer 2 is comprised of a conjugated diene based rubber composition which contains zinc stearate within the rubber composition and on its surface. The zinc stearate is formed as an in situ product of a combination of zinc oxide and stearic acid added to the rubber composition in an internal rubber mixer.

It is to be appreciated that zinc stearate is a soap, and particularly acts as a soap when contacting the water based soap on the chafer 2 or rim 3.

For the purposes of FIG 1, before the water of the aforesaid water based soap has dried, it is envisioned that a significant amount of torque is applied to the wheel rim by an associated vehicle drive train in the direction of the indicated arrow to cause the rim 2 to slip against the chafer 3 of the tire 1 to cause indicated position X of the lead weight fixed on tire rim 3, and thus the tire rim itself, to slightly move from the indicated position A to the indicated position B on the tire to thereby move the lead balance pad 4 in relationship to the tire 1 and to thereby slightly unbalance the tire/wheel assembly, which in most cases would not be appreciably noticeable.

In FIG 1, the prospective movement of the indicated position X of the rim 3 from position A to position B or the tire 1 is exaggerated for demonstrative purposes of FIG 1. In practice, it is considered that such slippage may range from nonexistence to perhaps 1 to 2 centimeters

In a first embodiment of FIG 1, the rubber composition of the chafer 2 contains zinc rosinate, with only a minimal amount, if any, of zinc stearate, as a product of zinc oxide and rosin acid formed in situ within the rubber composition.

For said second embodiment of FIG 1, for the illustrative purposes of FIG 1, the tire 1 does not slip against the rigid rim 3 upon applying torque to the tire wheel in a manner that the identifying mark X remains aligned with the identifying mark A on the tire 1 because the presence of the zinc rosinate in and on the surface of the chafer 2, provides the tire chafer 2 with a sufficiently increased coefficient of friction, as compared to the aforesaid inclusion of the zinc stearate in and on the surface of the chafer rubber composition, to resist potential slippage of the tire 1 against the rim 2.

In practice, it is readily understood by those having skill in the art that the rubber compositions would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, waxes, antioxidants and antiozonants, peptizing agents and reinforcing materials such as, for example, carbon black. As known to those skilled in the art, depending on the intended use of the sulfur vulcanizable and sulfur-vulcanized material (rubbers), the additives mentioned above are selected and commonly used in conventional amounts.

Typical amounts of tackifier resins, if used, may, for example, comprise 0.5 to 10 phr. Typical amounts of processing aids may comprise 1 to 20 phr. Such processing aids can include, for example, aromatic, naphthenic, and/or paraffinic processing oils. Silica and carbon black reinforcement have been hereinbefore discussed. Typical amounts of antioxidants, where used, may comprise 1 to 5 phr. A representative antioxidant may be, for example, diphenyl-p-phenylenediamine. Typical amounts of antiozonants, where used, may comprise 1 to 5 phr. Typical amounts of waxes, if used, may comprise 1 to 5 phr. Typical amounts of peptizers, if used, may comprise 0.1 to 1 phr. Typical peptizers may be, for example, pentachlorothiophenol and dibenzamidodiphenyl disulfide.

The vulcanization is conducted in the presence of a sulfur-vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur-vulcanizing agent is elemental sulfur. As known to those skilled in the art, sulfur-vulcanizing agents are used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.0 phr. In another embodiment, combinations of two or more accelerators in which the primary accelerator is generally used in the larger amount (0.5 to 2 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

Sometimes a combination of antioxidants, antiozonants and waxes may be collectively referred to as antidegradants.

The tire can be built, shaped, molded and cured by various methods which will be readily apparent to those having skill in such art.

The invention may be better understood by reference to the following example in which the parts and percentages are by weight unless otherwise indicated.

### EXAMPLE I

Experiments were conducted to evaluate the feasibility of introducing rosin acid in place of stearic acid in a carbon black reinforced rubber composition in combination with zinc oxide to enable an in situ formation of zinc rosinate within the rubber composition.

Rubber composition Samples A through F were prepared, with Sample A being a Control Sample formulated with a combination of zinc oxide and an addition of one phr of stearic acid to form zinc stearate in situ within the rubber composition. Samples B and C were formulated with an addition of 3 and 5 phr of stearic acid, respectively so that they are also Control Samples.

Experimental Samples D, E and F were formulated with rosin acid (instead of adding the stearic acid) in amounts of 1, 3 and 5 phr of rosin acid, respectively to form zinc rosinate in situ within the rubber compositions.

The rubber composition samples were prepared by mixing the elastomers(s) together with reinforcing fillers and other rubber compounding ingredients in a first non-productive mixing stage (NP) in an internal rubber mixer for 4 minutes to a temperature of 160°C. The mixture is then further sequentially mixed in a second non-productiive mixing stage (NP) in an internal rubber mixer (no additional ingredients added) to a temperature for 3 minutes to a temperature of 160°C. The resulting mixture is then mixed in a productive mixing stage (P) in an internal rubber mixer with curatives for 2 minutes to a temperature of 110°C. The rubber composition is cooled to below 40°C between each of the non-productive mixing steps and between the second non-productive mixing step and the productive mixing step.

The basic formulation for the rubber samples is presented in the following Table 1.

**Table 1**

| **First Non-Productive Mixing Step (NP1)** | **Parts** |
|---|---|
| Natural rubber¹ | 100 |
| Carbon black² | 50 |
| Rubber processing oil | 5 |
| Zinc oxide | 5 |
| Antioxidant³ | 2 |
| Added fatty acid (stearic acid), excluding rosin acid⁴ | 0, 1, 3, 5 |
| Added rosin acid⁵ | 0, 1, 3, 5 |

| **Productive Mixing Step (P)** | |
|---|---|
| Sulfur | 1.4 |
| Accelerator(s)⁶ | 1 |

| | |
|---|---|
| ¹TSR 20 natural rubber, which would ordinarily contain an average of from 0.03 to 1 weight percent naturally occurring (not free addition) C₁₈ fatty acids which may include naturally occurring stearic acid ²N299 rubber reinforcing carbon black, an ASTM designation ³Quinoline type ⁴Blend comprising stearic, palmitic and oleic acids containing at least 90 weight percent stearic acid. ⁵As gum rosin acid from the Eastman Chemical Company ⁶Sulfenamide and guanidine types | |

The following Table 2 illustrates cure behavior and various physical properties of rubber compositions based upon the basic recipe of Table 1 and reported herein as a Control Sample A and Samples B through F, including Samples D, E and F formulated with rosin acid and zinc oxide.

**Table 2**

| | **Rubber Samples** | | | | | |
|---|---|---|---|---|---|---|
| | Control | Control | Control | | | |
| | **A** | **B** | **C** | **D** | **E** | **F** |
| Added fatty acid (stearic acid),excl rosin acid,(phr) | 1 | 3 | 5 | 0 | 0 | 0 |
| Added rosin acid (phr) | 0 | 0 | 0 | 1 | 3 | 5 |

| **Rheometer, 150°C, MPa** | | | | | | |
|---|---|---|---|---|---|---|
| Maximum torque | 17.5 | 17.4 | 16.9 | 16.8 | 15.4 | 14.5 |
| Minimum torque | 3.1 | 3 | 2.8 | 3.4 | 3.1 | 3.2 |
| Delta torque | 14.4 | 14.4 | 14.1 | 13.4 | 13.3 | 11.3 |
| T90 (minutes) | 11.5 | 13.6 | 15 | 13 | 15.1 | 17.1 |

| **Stress-strain, ATS¹, 14 min, 160°C** | | | | | | |
|---|---|---|---|---|---|---|
| Tensile strength (MPa) | 24.4 | 24.7 | 22.9 | 22 | 21.8 | 22.2 |
| Elongation at break (%) | 469 | 451 | 418 | 468 | 490 | 524 |
| 300% modulus, ring (MPa) | 14 | 15.4 | 16 | 12.4 | 11.5 | 10.2 |

| **Rebound** | | | | | | |
|---|---|---|---|---|---|---|
| 23°C | 51 | 50 | 49 | 49 | 47 | 46 |
| 100°C | 63 | 64 | 63 | 60 | 58 | 57 |

| **Shore A Hardness** | | | | | | |
|---|---|---|---|---|---|---|
| 23°C | 63 | 67 | 68 | 63 | 64 | 63 |
| 100°C | 59 | 61 | 60 | 59 | 58 | 57 |

| **Coefficient of Friction²** | | | | | | |
|---|---|---|---|---|---|---|
| Average coefficient, on a dry substrate | 3.28 | 3.55 | 3.08 | 3.48 | 3.26 | 3.15 |
| Average coefficient, on a wet substrate | 0.98 | 1.07 | 1.05 | 1.2 | 1.45 | 2.11 |

| | | | | | | |
|---|---|---|---|---|---|---|
| ¹Automated Testing System instrument of the Instron Corporation ²ASTM D-1894. A coefficient of friction (COF) value for a rubber sample may be measured, for example, on a Model SP-2000 Slip/Peel tester from IMASS Inc at 6 inches (15.2 cm) per minute using a 200g sled against a substrate surface such as, for example, a polished aluminum surface | | | | | | |

From Table 2 it can be seen that the coefficient of friction values for Samples A through F (which contained the zinc stearate or the zinc rosinate from the added stearic acid or rosin acid) are similar for dry substrate conditions. However the coefficient of friction values for Samples D, E and F (which contained the zinc rosinate instead of the zinc stearate, formed in situ within the rubber composition as a product of added rosin acid and

zinc oxide) were dramatically improved for wet substrate conditions as compared to Samples A, B and C which contained the added zinc stearate without the added rosinate.

Accordingly, it is concluded that a tire with a chafer rubber composition containing a zinc soap in a form of zinc rosinate instead of zinc stearate may be prepared to promote an increase in coefficient of friction of the chafer's outer surface against a rigid (e.g. metal) tire wheel rim to form a suitable tire/rim wheel assembly.

A tire is prepared with a chafer component which contained zinc rosinate within its rubber composition and on its outer similar to the rubber composition of Rubber Sample F - where the zinc rosinate is the product of zinc oxide and added rosin acid formed in situ within its rubber composition - and where the chafer rubber composition does not contain zinc stearate from stearic acid being added to the zinc oxide containing chafer rubber composition.

### EXAMPLE II

Based upon results observed in Example I, additional experimental rubber samples were prepared to evaluate the effect of adding a phenolformaldehyde based tackifying resin to the carbon black reinforced rubber composition.

For this Example II, rubber Samples G through J were prepared in which a combination of zinc oxide and either stearic acid or rosin acid were added to the rubber compositions in the internal rubber mixer to form zinc stearate or zinc rosinate, respectively, in situ within the rubber composition, optionally with a tackifer being added.

Rubber Sample G was a Control Rubber Sample which contained a combination of zinc oxide and added stearic acid.

Rubber Sample H was the same as Control Rubber Sample G except that it also contained a tackifier and was also considered herein to be a Control Rubber Sample.

Experimental Rubber Sample I contained a combination of zinc oxide and added rosin acid without adding stearic acid.

Experimental Rubber Sample J was the same as Experimental Rubber Sample I except that it also contained a tackifier.

The rubber Samples were prepared in the manner of Example I with ingredients illustrated in the following Table 3.

**Table 3**

| **First Non-Productive Mixing Step (NP1)** | **Parts** |
|---|---|
| Natural rubber¹ | 100 |
| Carbon black² | 50 |
| Rubber processing oil | 5 |
| Zinc oxide | 5 |
| Antioxidant³ | 2 |
| Added fatty acid (stearic acid)⁴ | 0 or 5 |
| Added rosin acid⁵ | 0 or 5 |
| Tackifier⁷ | 0 or 5 |

| **Productive Mixing Step (P)** | |
|---|---|
| Sulfur | 1.4 |
| Accelerator(s)⁶ | 1 |

The ingredients, other than the tackifier, were the same as those identified with superscripts in Example I

⁷Tackifier as octylphenol/formaldehyde resin as SP1068^{™} from the Schenectady company

The following Table 4 illustrates cure behavior and various physical properties of rubber compositions based upon the general recipe of Table 3 and reported herein as Control Samples G and H and Experimental Samples I and J.

**Table 4**

| | **Control** | **Control** | | |
|---|---|---|---|---|
| **Rubber Samples** | **G** | **H** | **I** | **J** |
| Added fatty acid (stearic acid), (phr) | 5 | 5 | 0 | 0 |
| Added rosin acid (phr) | 0 | 0 | 5 | 5 |
| Tackifier (phr) | 0 | 5 | 0 | 5 |

| **Rheometer, 150°C, MPa** | | | | |
|---|---|---|---|---|
| Maximum torque | 15.2 | 13.6 | 13.3 | 10.6 |
| Minimum torque | 2.3 | 2.0 | 2.9 | 2.1 |
| Delta torque | 12.9 | 11.6 | 10.4 | 8.5 |
| T90 (minutes) | 11.9 | 12.1 | 15.0 | 13.1 |

| **Stress-strain, ATS¹, 32 min, 150°C** | | | | |
|---|---|---|---|---|
| Tensile strength (MPa) | 23.2 | 21.4 | 19.3 | 15.9 |
| Elongation at break (%) | 464 | 483 | 531 | 550 |
| 300 % modulus, ring (MPa) | 13.3 | 11.3 | 8.1 | 5.8 |

| **Rebound** | | | | |
|---|---|---|---|---|
| 23°C | 50 | 44 | 45 | 38 |
| 100°C | 63 | 59 | 55 | 47 |

| **Shore A Hardness** | | | | |
|---|---|---|---|---|
| 23°C | 65 | 64 | 61 | 60 |
| 100°C | 56 | 55 | 54 | 50 |

| **Coefficient of Friction²** | | | | |
|---|---|---|---|---|
| Average coefficient, on a dry substrate | 2.6 | 3.0 | 3.0 | 2.6 |
| Average coefficient, on a wet substrate | 0.33 | 0.32 | 0.57 | 0.55 |

The tests were conducted in the manner of Example I.

From Table 4 it can be seen that Samples I and J which contain rosin acid added during the mixing in the internal rubber mixer in the presence or absence of tackifier exhibited higher wet coefficient of friction (COF) values as compared to Control Samples G and H which contained stearic acid added in the internal rubber mixer either in the presence or absence of the tackifier.

Thus a major contributor to increasing the COF of the rubber composition is seen herein as the addition of the rosin acid to the rubber composition, whether or not a tackifier is included.

This demonstrates a desirabililty of the rosin acid inclusion in the rubber composition for a tire chafer intended to interface with a rigid tire wheel rim to resist slippage of the tire against the rim, particularly under wet conditions such as, for example, conditions experienced upon mounting the tire on the rim with a water based lubricant (soap) being pre-applied to the rim and/or rubber chafer component to facilitate the mounting of the tire on the rim.

### EXAMPLE III

Based upon results observed in Example II, additional experimental rubber samples were prepared to evaluate the feasibility of adding, in an internal rubber mixer, rosin acid and stearic acid to rubber compositions containing a combination of carbon black and precipitated silica reinforcement.

For this Example III, rubber Samples K through R were prepared which contained a combination of zinc oxide and either stearic acid or rosin acid added to the internal rubber mixer to form zinc stearate or zinc rosinate, respectively, in situ within the rubber composition, as well as a precipitated silica and silica coupling agent, optionally also including a tackifier.

Rubber Samples K, L and M were Control Rubber Samples which contained a combination of zinc oxide and 1, 3 or 5 phr of stearic acid.

Experimental Rubber Samples N, O and P contained a combination of zinc oxide and 1, 3 or 5 phr of rosin acid.

Control Rubber Sample Q contained a combination of zinc oxide and 5 phr of stearic acid together with a tackifier.

Experimental Rubber Sample R contained a combination of zinc oxide and 5 phr of rosin acid together with a tackifier.

The rubber Samples were prepared in the manner of Example I with ingredients illustrated in the following Table 5.

**Table 5**

| **First Non-Productive Mixing Step (NP1)** | **Parts** |
|---|---|
| Natural rubber¹ | 100 |
| Carbon black² | 30 |
| Rubber processing oil | 8 |
| Zinc oxide | 5 |
| Antioxidant³ | 2 |
| Added fatty acid (stearic acid)⁴ | 0, 1, 3 or 5 |
| Added rosin acid⁵ | 0, 1, 3 or 5 |
| Tackifier⁷ | 0 or 5 |
| Silica⁸ | 10 |
| Silica coupling agent⁹ | 2 |

| **Productive Mixing Step (P)** | |
|---|---|
| Sulfur | 1.4 |
| Accelerator(s)⁶ | 1 |

The ingredients, other than the silica and coupling agent, were the same as those identified with superscripts in Example II

⁸Precipitated silica as 1165MP™ from Rhoda

⁹Composite of a silica coupling agent and carbon black carrier in a 50/50 weight ratio thereof reported in the Table in terms of the composite, where the coupling agent is comprised of a bis(3-triethoxypropyl) polysulfide containing an average of from 2.1 to 2.4 connecting sulfur content in its polysulfidic bridge as Si266™ from Degussa.

The following Table 6 illustrates cure behavior and various physical properties of rubber compositions based upon the general formulation of Table 5.

**Table 6**

| | Control | Control | Control | | | | Control | |
|---|---|---|---|---|---|---|---|---|
| **Rubber Samples** | **K** | **L** | **M** | **N** | **O** | **P** | **Q** | **R** |
| Added fatty acid (stearic acid), (phr) | 1 | 3 | 5 | 0 | 0 | 0 | 5 | 0 |
| Added rosin acid (phr) | 0 | 0 | 0 | 1 | 3 | 5 | 0 | 5 |
| Tackifier (phr) | 0 | 0 | 0 | 0 | 0 | 0 | 5 | 5 |
| **Rheometer, 150°C, MPa** | | | | | | | | |
| Maximum torque | 15.6 | 16.3 | 16.3 | 14.7 | 15.7 | 15.4 | 14.9 | 13.1 |
| Minimum torque | 2.6 | 2 | 1.8 | 2.8 | 2.5 | 2.4 | 1.3 | 2 |
| Delta torque | 13 | 14.3 | 14.8 | 11.9 | 13.2 | 13 | 13.6 | 11.1 |
| T90 (minutes) | 7.2 | 10.1 | 11.3 | 8.6 | 9.1 | 10.5 | 11.3 | 8.7 |
| **Stress-strain, ATS, 32 min, 150°C** | | | | | | | | |
| Tensile strength (MPa) | 21.8 | 22.5 | 22.2 | 20.2 | 21.6 | 20.9 | 21.4 | 20.3 |
| Elongation at break (%) | 480 | 457 | 449 | 504 | 506 | 520 | 476 | 568 |
| 300% modulus, ring (MPa) | 11.5 | 13.5 | 13.7 | 9.6 | 10.7 | 9.6 | 11.7 | 7.7 |
| **Rebound** | | | | | | | | |
| 23°C | 57 | 56 | 55 | 52 | 50 | 49 | 67 | 46 |
| 100°C | 67 | 68 | 70 | 63 | 63 | 61 | 67 | 58 |
| **Shore A Hardness** | | | | | | | | |
| 23°C | 61 | 65 | 67 | 60 | 64 | 64 | 64 | 60 |
| 100 °C | 58 | 60 | 60 | 55 | 59 | 59 | 57 | 53 |
| **Coefficient of Friction** | | | | | | | | |
| Average coefficient, on a dry substrate | 3.2 | 3.1 | 2.4 | 3 | 3.1 | 3.1 | 3 | 2.7 |
| Average coefficient, on a wet substrate | 0.3 | 0.32 | 0.29 | 0.3 | 0.48 | 0.49 | 0.31 | 0.51 |

The tests were conducted in the manner of Example I.

From Table 6 it can be seen that Samples K, L and M which contain stearic acid added in the internal rubber mixer at 1, 3 and 5 phr levels have low wet coefficient of friction (COF) values as well as rubber Sample Q which contains 5 phr of added stearic acid and tackifier.

From Table 6 it can be further seen that Samples O, P and R which contained 3 or 5 phr of added rosin acid with or without added tackifier have much higher values of wet COF. Sample N, which contains only 1 phr of added rosin acid has a low wet COF value similar to Samples K, L and M and Q. This is an indication that a minimal, or threshold, level (e.g. at least 1 phr, namely preferably greater than 1 phr and more preferably from 2 to 5 phr) of added rosin acid is desired insofar as promoting a higher coefficient of friction for the surface of the rubber composition.

### EXAMPLE IV

A tire is prepared with a chafer component which contained zinc rosinate within its rubber composition and on its outer surface similar to the rubber composition of Rubber Sample R of Example III where the zinc rosinate is the product of zinc oxide and rosin acid formed in situ within its rubber composition - and where the chafer rubber composition does not contain added zinc stearate.

## Claims

1. A tire comprising a chafer (2) composed of a rubber composition which comprises, based upon parts by weight per 100 parts by weight rubber (phr):
(A) at least one conjugated diene-based elastomer,
(B) 1 to 10 phr of zinc soap comprising zinc rosinate, and
(C) 30 to 120 phr of particulate rubber reinforcing filler comprising from 10 to 110 phr of rubber reinforcing carbon black and from 10 to 110 phr of precipitated silica,
(D) a silica coupler having a moiety reactive with hydroxyl groups on the precipitated silica and another moiety interactive with said at least one conjugated diene-based elastomer,
wherein the rubber composition is free of zinc stearate.

2. The tire of claim 1 wherein the rubber composition comprises the zinc rosinate within the rubber composition and on the chafer's running surface.

3. The tire of claim 1 or 2 wherein said zinc rosinate is the product of zinc oxide and rosin acid or is zinc rosinate added to the rubber composition in a form of zinc rosinate.

4. The tire of at least one of the previous claims wherein the zinc soap is from 2 to 5 phr of zinc rosinate as the product of zinc oxide and rosin acid formed in situ within the rubber composition.

5. The tire of at least one of the previous claims wherein said tire chafer comprises conjugated diene-based elastomers comprising at least one polymer of isoprene and 1,3-butadiene and copolymer of styrene and at least one of isoprene and 1,3-butadiene.

6. The tire of at least one of the previous claims wherein said rosin acid comprises at least one of gum rosin acid, wood rosin acid and tall oil rosin acid, hydrogenated and disproportionated forms thereof, and their mixtures.

7. A method of preparing a rubber composition, the method comprising, based upon parts by weight per 100 parts by weight rubber (phr), providing:
(A) at least one conjugated diene-based elastomer,
(B) 1 to 10 phr of zinc soap comprising zinc rosinate,
(C) 30 to 120 phr of particulate rubber reinforcing filler comprising from 10 to 110 phr of rubber reinforcing carbon black and from 10 to 110 phr of precipitated silica, and
(D) a silica coupler having a moiety reactive with hydroxyl groups on the precipitated silica and another moiety interactive with said at least one conjugated diene-based elastomer,
wherein the rubber composition is prepared free of zinc stearate, and wherein the zinc rosinate is provided as reaction product of zinc oxide and rosin acid formed in situ within the rubber composition or is zinc rosinate added to the rubber composition in a form of zinc rosinate.

## Patentansprüche

1. Reifen, umfassend einen Wulstschutzstreifen (2), der aus einer Kautschukzusammensetzung zusammengesetzt ist, die, auf Basis von Gewichtsteilen je 100 Gewichtsteile Kautschuk (ThK), umfasst:
(A) mindestens ein Elastomer auf Basis konjugierten Diens,
(B) 1 bis 10 ThK Zinkseife, die Zinkresinat umfasst, und
(C) 30 bis 120 ThK partikelförmigen Kautschukverstärkungs-Füllstoff, umfassend 10 bis 110 ThK Kautschukverstärkungs-Carbon Black und 10 bis 110 ThK ausgefälltes Silika,
(D) einen Silika-Haftvermittler, der einen Anteil aufweist, der mit Hydroxylgruppen auf dem ausgefällten Silika reaktiv ist, und einen anderen Anteil, der mit besagtem mindestens einen Elastomer auf Basis konjugierten Diens in Wechselwirkung tritt,
wobei die Kautschukzusammensetzung frei von Zinkstearat ist.

2. Reifen nach Anspruch 1, wobei die Kautschukzusammensetzung das Zinkresinat innerhalb der Kautschukzusammensetzung und auf der Lauffläche des Wulstschutzstreifens umfasst.

3. Reifen nach Anspruch 1 oder 2, wobei das Zinkresinat das Produkt von Zinkoxid und Harzsäure ist oder Zinkresinat ist, das der Kautschukzusammensetzung in einer Form von Zinkresinat zugesetzt wurde.

4. Reifen nach mindestens einem der vorgenannten Ansprüche, wobei die Zinkseife 2 bis 5 ThK Zinkresinat ist, als das Produkt von Zinkoxid und Harzsäure, in situ innerhalb der Kautschukzusammensetzung gebildet.

5. Reifen nach mindestens einem der vorgenannten Ansprüche, wobei der Reifenwulstschutzstreifen Elastomere auf Basis konjugierten Diens umfasst, die mindestens ein Polymer von Isopren und 1,3-Butadien und Copolymer von Styrol und mindestens einem von Isopren und 1,3-Butadien umfassen.

6. Reifen nach mindestens einem der vorgenannten Ansprüche, wobei besagte Harzsäure mindestens eines von Gumharzsäure, Holzharzsäure und Tallöl-Harzsäure, hydrierte und disproportionierte Formen davon und deren Mischungen umfasst.

7. Verfahren zur Herstellung einer Kautschukzusammensetzung, wobei das Verfahren, auf Basis von Gewichtsteilen je 100 Gewichtsteile Kautschuk (ThK), die Bereitstellung umfasst:
(A) mindestens eines Elastomers auf Basis konjugierten Diens,
(B) 1 bis 10 ThK Zinkseife, die Zinkresinat umfasst, und
(C) 30 bis 120 ThK partikelförmigen Kautschukverstärkungs-Füllstoffs, umfassend 10 bis 110 ThK Kautschukverstärkungs-Carbon Black und 10 bis 110 ThK ausgefälltes Silika,
(D) eines Silika-Haftvermittlers, der einen Anteil aufweist, der mit Hydroxylgruppen auf dem ausgefällten Silika reaktiv ist, und einen anderen Anteil, der mit besagtem mindestens einen Elastomer auf Basis konjugierten Diens in Wechselwirkung tritt,
wobei die Kautschukzusammensetzung frei von Zinkstearat hergestellt wird, und wobei das Zinkresinat als in situ innerhalb der Kautschukzusammensetzung gebildetes Reaktionsprodukt von Zinkoxid und Harzsäure vorgesehen wird oder Zinkresinat ist, das der Kautschukzusammensetzung in einer Form von Zinkresinat zugesetzt wurde.

## Revendications

1. Bandage pneumatique comprenant une bandelette talon (2) composée d'une composition de caoutchouc qui comprend, en se basant sur 100 parties en poids par 100 parties en poids de caoutchouc (phr) :
(A) au moins un élastomère à base de diène conjugué ;
(B) à concurrence de 1 à 10 phr, un savon de zinc comprenant du résinate de zinc ; et
(C) à concurrence de 30 à 120 phr, une matière de charge particulaire pour le renforcement du caoutchouc, comprenant, à concurrence de 10 à 110 phr, du noir de carbone pour le renforcement du caoutchouc et, à concurrence de 10 à 110 phr, de la silice précipitée ;
(D) un coupleur de silice possédant une fraction apte à réagir avec les groupes hydroxyle sur la silice précipitée et une autre fraction apte à entrer en interaction avec ledit au moins un élastomère à base de diène conjugué ;
dans lequel la composition de caoutchouc est exempte de stéarate de zinc.

2. Bandage pneumatique selon la revendication 1, dans lequel la composition de caoutchouc comprend le résinate de zinc au sein de la composition de caoutchouc et sur la surface de roulement de la bandelette talon.

3. Bandage pneumatique selon la revendication 1 ou 2, dans lequel ledit résinate de zinc représente le produit d'oxyde de zinc et d'acide résinique ou représente du résinate de zinc ajouté à la composition de caoutchouc sous la forme de résinate de zinc.

4. Bandage pneumatique selon au moins une des revendications précédentes, dans lequel le savon de zinc représente, à concurrence de 2 à 5 phr, du résinate de zinc sous la forme du produit d'oxyde de zinc et d'acide résinique, qui se forme in situ au sein de la composition de caoutchouc.

5. Bandage pneumatique selon au moins une des revendications précédentes, dans lequel ladite bandelette talon comprend des élastomères à base de diènes conjugués comprenant au moins un polymère choisi parmi l'isoprène et le 1,3-butadiène et un copolymère de styrène et d'au moins un membre choisi parmi le groupe comprenant l'isoprène et le 1,3-butadiène.

6. Bandage pneumatique selon au moins une des revendications précédentes, dans lequel ledit acide résinique comprend au moins un membre choisi parmi le groupe comprenant de l'acide de colophane, de l'acide de colophane extractive et de l'acide de colophane d'huile de pin, leurs formes hydrogénées et dismutées, ainsi que leurs mélanges.

7. Procédé de préparation d'une composition de caoutchouc, le procédé comprenant, en se basant sur 100 parties en poids par 100 parties en poids de caoutchouc (phr), le fait de procurer :
(A) au moins un élastomère à base de diène conjugué ;
(B) à concurrence de 1 à 10 phr, un savon de zinc comprenant du résinate de zinc ; et
(C) à concurrence de 30 à 120 phr, une matière de charge particulaire pour le renforcement du caoutchouc, comprenant, à concurrence de 10 à 110 phr, du noir de carbone pour le renforcement du caoutchouc et, à concurrence de 10 à 110 phr, de la silice précipitée ;
(D) un coupleur de silice possédant une fraction apte à réagir avec les groupes hydroxyle sur la silice précipitée et une autre fraction apte à entrer en interaction avec ledit au moins un élastomère à base de diène conjugué ;
dans lequel la composition de caoutchouc est préparée en l'absence de stéarate de zinc, et dans lequel ledit résinate de zinc est fourni sous la forme du produit réactionnel d'oxyde de zinc et d'acide résinique in situ au sein de la composition de caoutchouc ou représente du résinate de zinc que l'on ajoute à la composition de caoutchouc sous la forme de résinate de zinc.
